# EUROPÄISCHE PATENTSCHRIFT

(11) **EP 4 388 184 B1**
(45) Veröffentlichungstag und Bekanntmachung des Hinweises auf die Patenterteilung: **20.05.2026**
(21) Anmeldenummer: 22765118.9
(22) Anmeldetag: 16.08.2022
(51) Int. Cl.: F02D 19/02, F02D 19/12, F02D 35/02, F02D 41/00

(54) **VERFAHREN ZUM BETRIEB EINER FREMDZÜNDENDEN VERBRENNUNGSKRAFTMASCHINE UND STEUEREINRICHTUNG ZUR DURCHFÜHRUNG DES VERFAHRENS**
METHOD FOR OPERATING A SPARK-IGNITION INTERNAL COMBUSTION ENGINE, AND CONTROLLER FOR CARRYING OUT THE METHOD
PROCÉDÉ POUR FAIRE FONCTIONNER UN MOTEUR À COMBUSTION INTERNE À ALLUMAGE COMMANDÉ ET DISPOSITIF DE COMMANDE POUR LA MISE EN OEUVRE DUDIT PROCÉDÉ

(30) Priorität: 16.08.2021 DE 102021121214
(43) Veröffentlichungstag der Anmeldung: 26.06.2024
(60) Teilanmeldung: 24157617.2
(73) Patentinhaber: Keyou GmbH, 85716 Unterschleißheim (DE)
(72) Erfinder: KOCH, Daniel, 80335 München (DE)
(74) Vertreter: Grünecker Patent- und Rechtsanwälte PartG mbB
(86) Internationale Anmeldenummer: PCT/EP2022/072865
(87) Internationale Veröffentlichungsnummer: WO 2023/021036

(56) Entgegenhaltungen:
- EP-A1- 1 754 874
- EP-A1- 3 578 786
- WO-A1-2021/155895
- DE-A1- 102014 217 373
- DE-A1- 102019 213 132
- US-B2- 7 421 330

## Beschreibung

Die vorliegende Erfindung betrifft ein Verfahren zum Betrieb einer fremdzündenden Verbrennungskraftmaschine sowie einer Steuereinrichtung zur Durchführung des Verfahrens.

In fremdgezündeten Otto-Motoren ist es bekannt, eine dem Brennraum zuzuführende Kraftstoffmenge auf Grundlage einer regulierten Luftmenge zu bestimmen. Insbesondere wenn die Leistung des Otto-Motors erhöht werden soll, wird ein Durchflussquerschnitt mittels einer Drosselklappte erhöht. Die Kraftstoffmenge wird dann abhängig von der Luftmenge, die durch den Durchflussquerschnitt strömt, so bestimmt, dass sich ein konstantes, üblicherweise stöchiometrisches Luft/Kraftstoff-Gemisch (Lambda = 1) ergibt.

Wird ein solcher Otto-Motor mit Wasserstoff als Kraftstoff betrieben, ist die zuvor beschriebene Steuerung der Kraftstoffmenge nicht adäquat. Denn das Verbrennungsverhalten von Wasserstoff weicht erheblich von dem für Otto-Motoren üblichen Kraftstoffen, wie Benzin, ab.

EP 1 754 874 A1 und DE 10 2019 213 132 A1 zeigen ein Verfahren zum Betrieb einer fremdzündenden Verbrennungskraftmaschine, wobei zum Verbrennen eines reicheren Gemischs die Abgasrückführmenge erhöht wird.

WO 2021/005344 A1 zeigt einen mit Wasserstoff betriebenen fremdzündenden Verbrennungsmotor. Dabei wird die Motorleistung allein durch die Kraftstoffmenge gesteuert. Jedoch können bei einer solchen reinen Kraftstoffführung Verbrennungsanomalien auftreten, die das Motorverhalten nachteilig beeinflussen.

Es ist deshalb Aufgabe der vorliegenden Erfindung, ein Verfahren zur Bestimmung der Kraftstoffmenge bereitzustellen, dass den Bedürfnissen einer mit Wasserstoff betriebenen Verbrennungskraftmaschine gerecht wird.

Diese Aufgabe wird erfindungsgemäß gelöst durch ein Verfahren nach Anspruch 1.

Gemäß einem ersten unabhängigen Aspekt wird ein Verfahren zum Betrieb einer fremdzündenden Verbrennungskraftmaschine bereitgestellt, wobei die Verbrennungskraftmaschine mit Wasserstoff als Kraftstoff betrieben wird, ein Lambda-Einspritz-Wert ein Wert ist, der eine Gemischbildung auf Grundlage einer einem Brennraum der Verbrennungskraftmaschine zuzuführenden Einspritz-Kraftstoffmenge und einer von außerhalb der Verbrennungskraftmaschine dem Brennraum zuzuführenden Luftmenge anzeigt, die Einspritz-Kraftstoffmenge zumindest bereichsweise unabhängig von einem Lambda-Soll-Wert bestimmt wird, vorzugsweise zumindest auf Grundlage einer Vorgabe-Kraftstoffmenge, besonders bevorzugt gleich der Vorgabe-Kraftstoffmenge bestimmt wird. Zudem wird die Einspritz-Kraftstoffmenge zumindest bereichsweise zumindest auf Grundlage der Luftmenge bestimmt.

Gemäß dem ersten Aspekt kann die Kraftstoffmenge die Steuergröße sein. Genauer gesagt wird die einzuspritzende Einspritz-Kraftstoffmenge zumindest bereichsweise unabhängig von einem vorgegebenen Lambda-Soll-Wert bestimmt. Somit kann beispielsweise bei Schwankungen der dem Motor zugeführten Luftmenge die Kraftstoffmenge frei auf Grundlage einer Vorgabekraftstoffmenge bestimmt werden, ohne dabei wie bei herkömmlichen Ottoverfahren an die zugeführte Luftmenge gebunden zu sein. Die Bestimmung der Kraftstoffmenge folgt also dem Dieselverfahren. Die Einspritz-Kraftstoffmenge wird zumindest bereichsweise unabhängig von einem festen Lambda-Soll-Wert bestimmt und eingespritzt. Dabei wird die Verbrennungskraftmaschine zumindest bereichsweise gemäß einer Qualitätsregelung betrieben. Somit kann die Flexibilität der Verbrennungskraftmaschine erhöht werden. Allerdings besteht bei Nichtberücksichtigung der Luftmenge die Gefahr, dass die Verbrennungskraftmaschine mit Verbrennungsgemischen betrieben wird, die Verbrennungsanomalien wie beispielsweise Klopfen hervorrufen. Deswegen wird gemäß der vorliegenden Erfindung die Einspritz-Kraftstoffmenge zumindest bereichsweise zumindest auf Grundlage der Luftmenge bestimmt. Dadurch kann der Lambda-Einspritz-Wert begrenzt werden, um beispielsweise Klopfen zu vermeiden.

Vorzugsweise wird die Luftmenge gemessen und/oder durch Modellierung erhalten. Somit kann auf die dem Brennraum zugeführte Luftmenge geschlossen werden.

Vorzugsweise wird zumindest bereichsweise die Einspritz-Kraftstoffmenge gleich der Vorgabekraftstoffmenge bestimmt. Somit kann unabhängig von der zugeführten Luftmenge die gewünschte Vorgabe-Kraftstoffmenge eingestellt und eingespritzt werden.

Gemäß der Erfindung wird die Einspritz-Kraftstoffmenge zumindest bereichsweise auf Grundlage von einem Lambda-Soll-Bereich so bestimmt werden, dass der Lambda-Einspritz-Wert innerhalb des zumindest einseitig durch einen ersten Lambda-Soll-Grenzwert begrenzten Lambda-Soll-Bereichs von Lambda-Soll-Werten liegt.

In gewissen Bereichen kann eine Begrenzung des Wasserstoff/Luft-Gemischs (Lambda-Einspritz-Wert) notwendig sein, um das Auftreten von Verbrennungsanomalien zu unterdrücken. Dabei kann die Kraftstoffmenge so bestimmt werden, dass sich unter Berücksichtigung der der Verbrennungskraftmaschine zuzuführenden Luftmenge ein Wasserstoff/Luft-Gemisch ergibt, dass innerhalb eines Bereichs liegt, in dem Verbrennungsanomalien nicht auftreten. Dieser Bereich umfasst eine Vielzahl von möglichen Lambda-Soll-Werten und wird zumindest einseitig durch einen Lambda-Soll-Grenzwert begrenzt. Gemäß diesem Aspekt wird also die Luftmenge bei der Bestimmung der Kraftstoffmenge berücksichtigt.

Vorzugsweise ist der erste Lambda-Soll-Grenzwert ein unterer Grenzwert des Bereichs von Lambda-Soll-Werten, vorzugsweise größer gleich 1,2 und kleiner gleich 2,5, besonders bevorzugt größer gleich 1,2 und kleiner gleich 1,8 ist, nochmals bevorzugt entspricht er 1,2.

Damit kann sichergestellt werden, dass nicht ein zu fettes Wasserstoff/Luft-Gemisch für die Verbrennung bereitgestellt wird. Vorzugsweise wird die mit Wasserstoff betriebene Verbrennungskraftmaschine im mageren Bereich (Lambda > 1) betrieben. Beispielsweise, je nach Leistungsbereich kann der Grenzwert aus den zuvor genannten Wertebereichen entnommen werden. Der Lambda-Soll-Grenzwert ist also vorzugsweise über die Leistungsbereiche variabel.

Gemäß noch einem weiteren Aspekt kann die Einspritz-Kraftstoffmenge so bestimmt werden, dass der Lambda-Einspritz-Wert dem Lambda-Soll-Grenzwert entspricht, vorzugsweise wenn ein Lambda-Vorgabe-Wert, der eine Gemischbildung auf Grundlage der Vorgabe-Kraftstoffmenge und der Luftmenge anzeigt, außerhalb des Lambda-Soll-Bereichs liegt.

Damit kann die Kraftstoffmenge bis an die Grenzen eines zulässigen Verbrennungsgemischs eingestellt werden. Die Kraftstoffmenge wird also so bestimmt, dass sich mit der zuzuführenden Luftmenge ein adäquates zulässiges Verbrennungsgemisch ergibt. Insbesondere kann sich eine verhältnismäßig geringe Korrektur der Vorgabe-Kraftstoffmenge ergeben, da der Lambda-Soll-Grenzwert der nächste Wert aus dem Lambda-Soll-Bereich bezüglich des Lambda-Vorgabewert ist.

Gemäß noch einem weiteren Aspekt kann der Lambda-Soll-Bereich, insbesondere der erste Lambda-Soll-Grenzwert, variabel sein.

Gemäß diesem Aspekt wird die Flexibilität der Verbrennungskraftmaschine erhöht. So kann abhängig von Randbedingungen die Begrenzung stärker oder schwächer ausfallen.

Gemäß noch einem weiteren Aspekt kann die Verbrennungskraftmaschine weiterhin eine Abgasrückführeinrichtung aufweisen, die zumindest bereichsweise Abgas in den Brennraum zurückführt.

Durch das Vorsehen einer Abgasrückführung kann die Verbrennung im Brennraum stabilisiert werden. Beispielsweise kann ein Klopfen der Verbrennungskraftmaschine aufgrund von Fehlzündungen verhindert werden. Insbesondere bei mageren Verbrennungen enthält das rückgeführte Abgas einen erheblichen Anteil an unverbranntem Sauerstoff (Restgas), der zur Stabilisierung der Verbrennung beiträgt. Dabei ist das rückgeführte Abgas hinsichtlich der Verbrennung vorzugsweise inert.

Alternativ oder zusätzlich kann die Verbrennungskraftmaschine eine Inertmittelzuführeinrichtung aufweisen, die konfiguriert ist, ein nicht an der Verbrennung teilnehmendes Inertmittel, vorzugsweise Wasser, in den Brennraum zuzuführen.

Durch die Zuführung des Inertmittels lässt sich ebenfalls die Verbrennung durch Absenken der Verbrennungstemperatur stabilisieren. Insbesondere kann es sich bei dem Inertmittel um flüssiges oder gasförmiges Wasser handeln. Dies ist bei der Verbrennung von Wasserstoff besonders träge und kann somit die Temperatur absenken. Weiterhin können dadurch zusätzliche Emissionen vermieden werden.

Erfindungsgemäß wird die Einspritz-Kraftstoffmenge zumindest bereichsweise auf Grundlage einer Abgasrückführmenge und/oder einer Inertmittelzuführmenge bestimmt.

Somit kann das durch die Abgasrückführmenge und/oder Inertmittelzuführmenge beeinflusste Verbrennungsverhalten bei der Bestimmung der Einspritz-Kraftstoffmenge berücksichtigt werden.

Gemäß der Erfindung ist der Lambda-Soll-Bereich, insbesondere der erste Lambda-Soll-Grenzwert, von der Abgasrückführmenge und/oder Inertmittelzuführmenge abhängig, vorzugsweise wird der erste Lambda-Soll-Bereich mit zunehmender angeforderter Abgasrückführmenge und/oder Inertmittelzuführmenge reduziert.

Die Abgasrückführmenge und/oder Inertmittelzuführmenge kann auf die Verbrennung einwirken. Daher kann die Begrenzung durch den Lambda-Soll-Bereich in Abhängigkeit der Abgasrückführmenge und/oder Inertmittelzuführmenge vorgenommen werden. Da die Abgasrückführung sowie die Inertmittelzuführung die Verbrennung stabilisiert, kann der Bereich von zulässigen Lambda-Soll-Werten vergrößert werden. Dies kann insbesondere durch Reduzieren des ersten Lambda-Soll-Grenzwerts als unterer Grenzwert erreicht werden.

Gemäß noch einem weiteren Aspekt kann eine Abgasrückführmenge und/oder Inertmittelzuführmenge angefordert werden, wenn ein Lambda-Vorgabe-Wert, der eine Gemischbildung auf Grundlage der Vorgabe-Kraftstoffmenge und der Luftmenge anzeigt, außerhalb des Lambda-Soll-Bereichs liegt, und/oder ab einem Grenzwert einer Leistungsanforderung.

Durch die Stabilisierung der Verbrennung mittels der Abgasrückführmenge und/oder der Inertmittelzuführmenge, kann der Lambda-Soll-Bereich gerade dann vergrößert werden, wenn der Lambda-Vorgabe-Wert außerhalb des Lambda-Soll-Bereichs ohne Abgasrückführung oder Inertmittelzuführung liegt. Mit zunehmender Leistungsanforderung geht ein höherer Kraftstoffbedarf einher, weshalb der Lambda-Vorgabe-Wert außerhalb des zulässigen Bereichs gelangen kann. Deshalb kann eine Abgasrückführmenge und/oder Inertmittelzuführmenge auch ab einem Grenzwert der Leistungsanforderung angefordert werden. Bei instationären Laststeigerungen der Verbrennungskraftmaschine, wie beispielweise Beschleunigungsvorgängen in einem Kraftfahrzeug, kann durch Anforderung einer Abgasrückführmenge und/oder Inertmittelzuführmenge die notwendige Leistung bereitgestellt werden. Denn ohne die Abgasrückführmenge und/oder Inertmittelzuführmenge wäre der Lambda-Soll-Bereich stärker begrenzt und die notwendige Leistung könnte nicht bereitgestellt werden. Vorzugsweise wird zumindest im Volllastbereich eine Abgasrückführmenge und/oder Inertmittelzuführmenge angefordert.

Alternativ oder zusätzlich kann, wenn der Lambda-Vorgabe-Wert außerhalb des Lambda-Soll-Bereichs liegt, also bei Erreichen oder Unterschreiten/Überschreiten eines Grenzwerts, insbesondere Unterschreiten des unteren Grenzwerts, und/oder ab einem Grenzwert einer Leistungsanforderung die angeforderte Abgasrückführmenge und/oder Inertmittelzuführmenge erhöht werden.

Somit kann der erste Lambda-Soll-Grenzwert entsprechend reduziert werden und der Lambda-Vorgabe-Wert kann eingestellt werden. Das erlaubt eine angemessene Steuerung und bedarfsgerechte Zudosierung der Abgasrückführmenge.

Gemäß noch einem weiteren Aspekt kann mit zunehmender Leistungsanforderung an die Verbrennungskraftmaschine die angeforderte Abgasrückführmenge und/oder Inertmittelzuführmenge erhöht werden.

Damit kann ein fetteres Gemisch, also ein niedrigerer Lambda-Einspritz-Wert, eingestellt werden, wie es bei höheren Leistungsanforderungen gewünscht ist, da die Abgasrückführung und/oder die Inertmittelzuführung die Verbrennung stabilisiert, und damit auch bei niedrigen Lambda-Einspritz-Werten ein Klopfen der Verbrennungskraftmaschine verhindert werden kann. Die Erhöhung der Abgasrückführmenge und/oder Inertmittelzuführmenge kann also zu einer Leistungserhöhung verwendet werden. Dies ist insbesondere bei instationären Vorgängen vorteilhaft.Gemäß noch einem weiteren Aspekt kann die Vorgabe-Kraftstoffmenge zumindest auf Grundlage einer Leistungsanforderung an die Verbrennungskraftmaschine bestimmt werden.

Damit kann die Leistungsanforderung als Grundlage für die Bestimmung der Vorgabe-Kraftstoffmenge und damit auch der Einspritz-Kraftstoffmenge dienen.

Vorzugsweise wird mit zunehmender Leistungsanforderung die Vorgabe-Kraftstoffmenge erhöht, und andersherum. Der Heizwert des Wasserstoff/Luft-Gemischs korreliert mit dem Anteil an Kraftstoff am Gemisch. Somit kann eine höhere Leistung durch eine Erhöhung der Kraftstoffmenge erreicht werden.

Gemäß noch einem weiteren Aspekt kann die Einspritz-Kraftstoffmenge zumindest bereichsweise auf Grundlage eines Klopfsignalwertes bestimmt werden.

Gemäß diesem Aspekt kann ein Klopfsignalwert, und damit ein Wert, der Verbrennungsanomalien anzeigt, bei der Bestimmung der Kraftstoffmenge berücksichtigt werden. Dabei kann anhand des Klopfsignalwerts, beispielsweise aus einem vorangehenden Verbrennungszyklus, Auskunft über die Klopfneigung eines betreffenden Zylinders der Verbrennungskraftmaschine erhalten werden. Die Klopfneigung hängt von Faktoren wie Temperaturen der Brennraumwand, Verdichtung und Fertigungstoleranzen ab. Diese Faktoren können in der Bestimmung der Einspritz-Kraftstoffmenge für den momentanen Zyklus durch den Klopfsignalwert verwendet werden. Der Klopfsignalwert kann weiterhin Aufschluss geben über eine Zusammensetzung des rückgeführten Abgases. Beispielsweise kann ein ein stärkeres Klopfen anzeigender Klopfsignalwert Aufschluss über einen geringen Sauerstoffgehalt im Abgas geben, was die Stabilisierung der Verbrennung erschwert.

Vorzugsweise wird der erste Lambda-Soll-Grenzwert mit zunehmendem Klopfsignalwert erhöht.

Damit kann ein Klopfen der Verbrennungskraftmaschine gelindert werden. Denn durch die Erhöhung des Lambda-Soll-Grenzwerts kann das Gemisch abgemagert werden, was die Klopfneigung reduziert.

Gemäß noch einem weiteren für sich genommen nicht erfindungsgemäßen Aspekt der vorliegenden Offenbarung wird ein Verfahren zum Betrieb einer fremdzündenden Verbrennungskraftmaschine vorgesehen, wobei die Verbrennungskraftmaschine mit Wasserstoff als Kraftstoff betrieben wird und die Verbrennungskraftmaschine eine Vielzahl von Brennräumen umfasst, wobei a) auf Grundlage eines zumindest einem Brennraum zugeordneten Klopfsignalwertes sowohl eine Einspritz-Kraftstoffmenge des zumindest einen Brennraums als auch eine Einspritz-Kraftstoffmenge zumindest eines anderen Brennraums bestimmt wird, vorzugsweise die Einspritz-Kraftstoffmenge des einen Brennraums so bestimmt wird, dass der Klopfsignalwert des einen Brennraums abnimmt, insbesondere vorzugsweise, der eine Brennraum mit einem magereren Wasserstoff/Luft-Gemisch betrieben wird und an dem zumindest einen anderen der Vielzahl von Brennräumen die Einspritz-Kraftstoffmenge so bestimmt wird, dass eine Gesamt-Vorgabe-Kraftstoffmenge, die eine vorgegebene Menge von allen Brennräumen zuführendem Kraftstoff ist, so nah wie möglich angenähert wird, nochmals bevorzugt erreicht wird.

Da in jedem der Brennräume zumindest bereichsweise eine Qualitätsregelung vorgenommen wird, kann gemäß diesem Aspekt der Erfindung die Kraftstoffmenge an dem zumindest einen anderen Zylinder auf Grundlage eines Klopfsignalwertes des zumindest einen Brennraums angepasst werden. Insbesondere kann an einzelnen Brennräumen die Anpassung der Kraftstoffmenge an dem zumindest einen Brennraum kompensiert werden. Vorzugsweise ist der Klopfsignalwert des zumindest einen Brennraums höher als der des zumindest einen anderen Brennraums. Dieser Aspekt kann als zweiter unabhängiger Aspekt, der zusammenfassend als Umverteilung der Kraftstoffmenge definiert werden kann, oder in Kombination mit den vorangehenden Aspekten des ersten unabhängigen Aspekts vorgesehen werden. Durch diesen Aspekt wird ebenfalls das Auftreten von Verbrennungsanomalien reduziert und somit ein Verfahren vorgesehen, bei dem den Bedürfnissen von wasserstoffbetriebenen Verbrennungskraftmaschinen Rechnung getragen wird.

Die Gesamt-Vorgabe-Kraftstoffmenge kann eine Kraftstoffmenge sein, die auf Grundlage einer Leistungsanforderung bestimmt wird. Soll beispielsweise eine bestimmte Leistung erreicht werden, kann trotz des Klopfens in den Brennräumen gewisser Zylinder diese Leistung erreicht werden oder zumindest angenähert werden, indem an anderen Zylindern die Kraftstoffmenge entsprechend angepasst wird.

Vorzugsweise wird in a) eine Änderungsmenge gegenüber einer Vorgabekraftstoffmenge des zumindest einen Brennraums zumindest teilweise, vorzugsweise vollständig, der Kraftstoffmenge von zumindest einem anderen Brennraum mit einem zugeordneten niedrigeren Klopfsignalwert hinzugefügt, besonders bevorzugt jeweils der Kraftstoffmenge einer Vielzahl von anderen Brennräumen, hinzugefügt. Gemäß noch einem weiteren Aspekt kann die Änderungsmenge abhängig von den jeweiligen Klopfsignalwerten der anderen Brennräume der Kraftstoffmenge der jeweiligen Brennräume hinzugefügt werden.

Somit kann an dem zumindest einen Brennraum die Kraftstoffmenge verringert werden, indem beispielsweise der untere Lambda-Soll-Grenzwert erhöht wird, und an dem zumindest einen anderen Brennraum die Kraftstoffmenge vorzugsweise um die Reduktionsmenge erhöht werden, wobei die gesamte Leistungsabgabe der Verbrennungskraftmaschine erhalten bleiben kann.

In dem zweiten unabhängigen Aspekt kann neben a) weiterhin zumindest eines von:
b) Erhöhung der Abgasrückführmenge an zumindest dem einen Brennraum;
c) Verschieben des Zündzeitpunkts an zumindest dem einen Brennraum zu einem späteren Zeitpunkt; und
d) Verringerung der Leistungsanforderung an die Verbrennungskraftmaschine,
durchgeführt werden.

Wie bereits zu dem zuvor erwähnten ersten unabhängigen Aspekt ausgeführt, kann durch b) die Verbrennung stabilisiert werden. Die Erhöhung der Abgasrückführmenge erfolgt zumindest an dem einen Brennraum, dem ein kritischer (höchster) Klopfsignalwert zugeordnet ist, beispielsweise durch ein Ventil oder eine Drossel in dem Zuführkanal zu dem jeweiligen Brennraum. Vorteilhafterweise erfolgt sie allerdings global für jeden von der Vielzahl von Brennräumen, wobei dann nicht in jedem Zuführkanal ein Ventil oder eine Drossel vorgesehen werden muss, sondern über ein zentrales Ventil die Regelung erfolgen kann. Das vereinfacht das System und sorgt für eine Stabilisierung der Verbrennung in allen Zylindern bzw. Brennräumen. Deshalb kann damit in dem zumindest einen anderen Brennraum die Kraftstoffmenge erhöht werden. Eine Änderungsmenge an dem zumindest einen Brennraum kann somit an dem zumindest einen anderen Brennraum besser aufgenommen werden.

Durch c) kann zumindest an dem einen Brennraum Klopfen reduziert werden, da die Spätstellung der Zündung ein zu frühes unkontrolliertes Verbrennen unterbindet. Insbesondere kann die Zündkerze zu einem späteren Zeitpunkt aktiviert werden. Verschieben des Zündzeitpunkts zu einem späteren Zeitpunkt ist beispielsweise auf eine Kolbenposition des den Brennraum begrenzenden Kolbens oder einen Kurbelwinkel bezogen und gegenüber einem Referenzwert des Zündzeitpunkts gemeint. Der Referenzwert kann beispielsweise der Zündzeitpunkt aus dem vorherigen Zyklus sein, oder ein sonstiger Referenzwert der dem Verbrennungs-Lambda des einen Brennraums zugeordnet ist, vorzugsweise ein optimaler Zündzeitpunkt für das jeweilige Lambda. Insbesondere kann das Gemisch zu einem Zeitpunkt entzündet werden, an dem sich der Kolben näher einem oberen Totpunkt befindet als zum Referenzzeitpunkt.

Durch d) kann eine Vorgabe-Kraftstoffmenge an dem zumindest einen Brennraum mit dem kritischen Klopfsignalwert verringert werden, wodurch das Gemisch abgemagert werden kann und dadurch die Klopfneigung reduziert werden kann.

Die Schritte b), c) und d) werden vorzugsweise in der oben angegebenen Reihenfolge durchgeführt, beispielsweise wenn festgestellt wird, dass ein Grenzwert des Klopfsignalwerts noch immer überschritten ist. Wird beispielsweise festgestellt, dass trotz Umverteilung gemäß a) weiterhin ein zu hoher Klopfsignalwert an dem einen Brennraum auftritt, kann b) durchgeführt werden. Selbiges gilt für die Schritte c) und d). Somit können motorschonende Schritte wie Umverteilung und Abgasrückführung zuerst durchgeführt werden.

Es ist weiterhin bevorzugt, dass zumindest in dem zweiten unabhängigen Aspekt eine Prüfung durchgeführt wird, ob eine Umverteilung der Kraftstoffmenge möglich ist, beispielsweise ob an zumindest einem der Brennräume ein Klopfsignalwert unterhalb eines Grenzwerts des Klopfsignalwerts liegt, wobei dann Kraftstoff von dem zumindest einen Brennraum an den Brennraum mit dem niedrigen Klopfsignalwert umverteilt werden kann. Wenn dem so ist, kann die Kraftstoffumverteilung durchgeführt werden, anderenfalls kann einer der Schritte b), c) und d) durchgeführt werden.

Gemäß noch einem weiteren Aspekt kann die Einspritz-Kraftstoffmenge zumindest bereichsweise auf Grundlage einer Lambdasondenmessung in einem Abgasstrang der Verbrennungskraftmaschine bestimmt werden.

Damit kann der Restgasgehalt im Abgas bestimmt werden, der Auskunft über das Gemischverhältnis aus dem vorangehenden Verbrennungszyklus geben kann. Im Falle einer angeforderten Abgasrückführung kann diese Information doppelt relevant sein. Denn sie gibt zusätzlich Aufschluss über den Restgasgehalt des Abgases, das dem Brennraum über die Abgasrückführung wieder zugeführt wird. Somit kann der Lambda-Soll-Grenzwert ebenfalls auf Grundlage der Lambdasondenmessung bestimmt werden.

Gemäß einem weiteren Aspekt wird eine Steuereinrichtung vorgesehen, die konfiguriert ist, ein Verfahren nach einem der vorangehenden Aspekte der Erfindung durchzuführen.

Damit können die Verfahren nach den vorstehenden Aspekten durchgeführt werden, wenn die Steuereinrichtung beispielsweise in einem Kraftfahrzeug mit Wasserstoffverbrennungsmotor verbaut wird.

Gemäß einem weiteren Aspekt der vorliegenden Erfindung wird ein Programm vorgesehen, das, wenn es auf einem mit einer Verbrennungskraftmaschine gekoppelten Computer ausgeführt wird, den Computer veranlasst, ein Verfahren gemäß der obigen Aspekte der Erfindung durchzuführen.

Gemäß noch einem weiteren Aspekt der vorliegenden Erfindung wird ein computerlesbares Speichermedium vorgesehen, auf dem das zuvor beschriebene Programm gespeichert ist.

Die Erfindung wird nachfolgend unter Bezugnahme auf die beigefügten Figuren beschrieben.

In Fig. 1 ist ein Ablaufdiagramm dargestellt, das das erfindungsgemäße Verfahren illustriert.

In Fig. 2 ist ein Leistungsverlauf über der Drehzahl einer Abgasrückführungsrate über der Drehzahl gegenübergestellt.

In Fig. 3a ist schematisch eine äußere Gemischbildung in einem mit Wasserstoff betriebenen Verbrennungsmotor dargestellt, während in Fig. 3b eine innere Gemischbildung dargestellt ist.

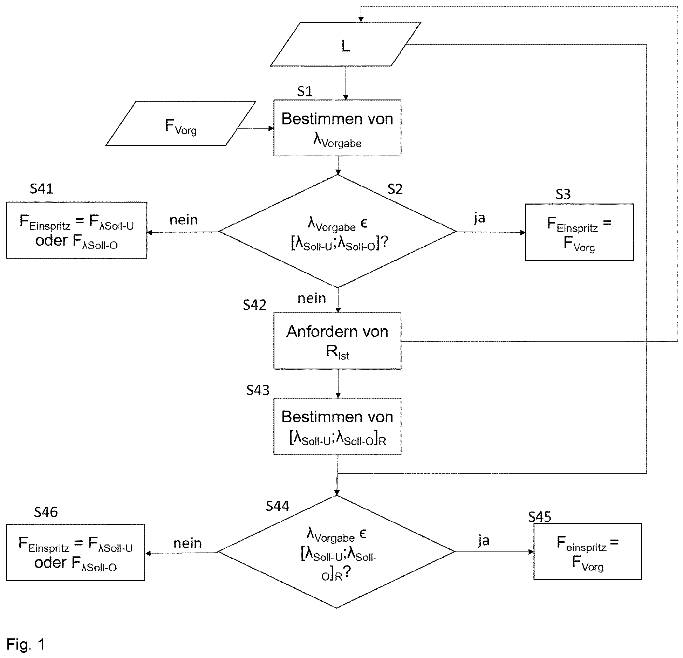

Das in Fig. 1 gezeigte Ablaufdiagramm veranschaulicht ein Verfahren, das beispielsweise zur Regelung einer Kraftstoffmenge in einem wasserstoffbetriebenen Verbrennungsmotor zum Einsatz kommen kann. Insbesondere kann dabei die über einen Injektor dem jeweiligen Brennraum zuzudosierende Menge an Wasserstoff für den nächsten Verbrennungszyklus bestimmt werden. Der Verbrennungsmotor weist in seinem Zylinderkopf eine Zündkerze für jeden Brennraum auf. Für die Zwecke der vorliegenden Erfindung handelt es sich demnach um fremdzündende Verbrennungskraftmaschinen. Die Verbrennungskraftmaschine weist zumindest einen Brennraum auf, der durch einen Zylinder, Zylinderkopf und einen mit einer Kurbelwelle gekoppelten Kolben begrenzt sein kann. Das Verfahren dient der Kraftstoffregelung eines Verbrennungszyklus bezüglich dieses Brennraums, wobei ein Wasserstoff/Luft-Gemisch in dem Brennraum verbrannt wird.

Gemäß dem Verfahren wird zunächst eine Vorgabekraftstoffmenge F_{Vorg} vorzugsweise gemäß einer Lastanforderung vorgegeben. Die Vorgabekraftstoffmenge F_{Vorg} orientiert sich dabei an dem Heizwert des Kraftstoffs. Ebenso kann die beispielsweise mittels eines Luftmassensensors gemessene von außerhalb der Verbrennungskraftmaschine dem Brennraum zuströmende Menge an Umgebungsluft L ermittelt werden. Aus diesen beiden Werten kann dann in einem Schritt S1 der sich aus der Vorgabekraftstoffmenge F_{Vorg} und der Umgebungsluft L ergebende Lambda-Vorgabe-Wert λ_{Vorgabe} berechnet werden.

Anschließend kann in einem Schritt S2 überprüft werden, ob der Lambda-Vorgabe-Wert λ_{Vorgabe} innerhalb eines Lambda-Soll-Bereichs [λ_{Soll-U};λ_{Soll-O}] mit dem unteren Grenzwert λ_{Soll-U} und dem oberen Grenzwert λ_{Soll-O} liegt. Ist dies der Fall, wird in einem Schritt S3 die Einspritz-Kraftstoffmenge F_{Einspritz} gleich der Vorgabekraftstoffmenge F_{Vorg} gesetzt.

Liegt in Schritt S2 der Lambda-Vorgabe-Wert λ_{Luft-Vorgabe} außerhalb des Lambda-Soll-Bereichs [λ_{Soll-U}; λ_{Soll-O}] kann in einem Schritt S41 die Einspritz-Kraftstoffmenge F_{Einspritz} gleich dem dem Lamda-Vorgabe-Lambda λ_{Vorgabe} näheren Grenzwert λ_{Soll-U} oder λ_{Soll-O} gesetzt werden. Die Einspritz-Kraftstoffmenge F_{Einspritz} wird also im Falle von Schritt S41 korrigiert. Der Lambda-Soll-Bereich [λ_{Soll-U}; λ_{Soll-O}] kann vorab für die spezifische Verbrennungskraftmaschine ermittelt werden. Gemäß der Erfindung ist der Lambda-Soll-Bereich [λ_{Soll-U}; λ_{Soll-O}] in Schritt S2 ein Lambda-Soll-Bereich, wobei keine Abgasrückführmenge in den Brennraum zurückgeführt wird. In diesen Fällen ist der untere Grenzwert λ_{Soll-U} vorzugsweise größer gleich 2,0 und kleiner gleich 4,5 noch bevorzugter größer gleich 2,0 und kleiner gleich 4, und beträgt besonders bevorzugt zwischen 2,2-3,8.

Liegt in Schritt S2 der Lambda-Vorgabe-Wert λ_{Luft-Vorgabe} außerhalb des Lambda-Soll-Bereichs [λ_{Soll-U}; λ_{Soll-O}] ohne Abgasrückführung kann alternativ in einem Schritt S42 eine Abgasrückführmenge angefordert werden, wenn die Verbrennungskraftmaschine zusätzlich eine Abgasrückführeinrichtung aufweist. Die tatsächlich dem Brennraum aus der Anforderung zugeführte Abgasrückführmenge Rₗₛₜ kann beispielsweise ebenfalls durch einen Luftmassensensor bestimmt werden, oder modelliert werden. Vorzugsweise wird zumindest eine der Luftmenge und der Abgasrückführmenge auf Grundlage einer Wechselwirkung zwischen Luftmenge und Abgasrückführmenge erfasst. Beispielsweise kann die Abgasrückführmenge Rₗₛₜ aus der Differenz einer Brennraumfüllmenge und der Luftmenge erhalten werden. Anstatt oder zusätzlich zu der Abgasrückführeinrichtung kann auch eine Inertmittelzuführeinrichtung in der Verbrennungskraftmaschine vorgesehen werden. Die Inertmittelzuführeinrichtung kann ein Inertmittel wie beispielsweise Wasser direkt oder indirekt in den Brennraum zuführen. Das Inertmittel nimmt nicht an der Verbrennung teil und hat vorzugsweise eine spezifische Wärmekapazität von mindestens 900 J/(kg*K), vorzugsweise von mindestens 1500 J/(kg*K), nochmals bevorzugt von mindestens 4000 J/(kg*K).

Die Abgasrückführung sowie die Inertmittelzuführung bewirkt, dass die Verbrennung im Brennraum der Verbrennungskraftmaschine stabilisiert wird. Beispielsweise kann ein Klopfen der Verbrennungskraftmaschine aufgrund von Fehlzündungen zumindest reduziert oder sogar vollkommen verhindert werden.

Somit kann aufgrund der angeforderten Abgasrückführmenge Rₗₛₜ in einem Schritt S43 ein anderer Lambda-Soll-Bereich [λ_{Soll-U}; λ_{Soll-O}]_{R} bestimmt werden, der die Abgasrückführmenge Rₗₛₜ berücksichtigt. In diesem Lambda-Soll-Bereich [λ_{Soll-U}; λ_{Soll-O}]_{R} ist insbesondere der untere Grenzwert λ_{Soll-U} gegenüber dem aus Schritt S2 reduziert. Somit können fettere Wasserstoff/Luft-Gemische ohne Verbrennungsanomalien verbrannt werden. Der Lambda-Soll-Bereich [λ_{Soll-U}; λ_{Soll-O}]_{R} hängt von der zur Verfügung stehenden Abgasrückführmenge ab. Bei hohen Abgasrückführmengen kann der untere Lambda-Grenzwert vorzugsweise bis auf einen Wert von 1,2 abgesenkt werden.

In Schritt S44 wird erneut ein Vergleich ähnlich dem in Schritt S2 vorgenommen. Insbesondere wird überprüft, ob der Lambda-Vorgabe-Wert λ_{Vorgabe} innerhalb eines Lambda-Soll-Bereichs [λ_{Soll-U}; λ_{Soll-O}]_{R} unter Berücksichtigung der Abgasrückführmenge Rₗₛₜ mit dem unteren Grenzwert λ_{Soll-U} und dem oberen Grenzwert λ_{Soll-O} liegt. Ist dies der Fall, wird in einem Schritt S45 die Einspritz-Kraftstoffmenge F_{Einspritz} gleich der Vorgabekraftstoffmenge F_{Vorg} gesetzt.

Anderenfalls wird in einem Schritt S46 die Einspritz-Kraftstoffmenge F_{Einspritz} gleich dem dem Lambda-Vorgabe-Wert λ_{Vorgabe} näheren Grenzwert λ_{Soll-U} oder λ_{Soll-O} des Lambda-Soll-Bereichs unter Berücksichtigung der Abgasrückführmenge Rₗₛₜ gesetzt. Die Einspritz-Kraftstoffmenge F_{Einspritz} wird also im Falle von Schritt S46 korrigiert.

Es ist zu beachten, dass alternativ, wenn festgestellt wird, dass der Lambda-Vorgabe-Wert λ_{Vorgabe} außerhalb des Lambda-Soll-Bereichs liegt, also ein Über-/Unterschreiten eines Grenzwerts, insbesondere des unteren Grenzwerts λ_{Soll-U} festgestellt wird, die Abgasrückführmenge erhöht werden kann. Dies kann in Schritt S42 geschehen, in diesem Fall ist die Erhöhung mit einer Erstanforderung verbunden. Dies kann jedoch auch nach Schritt S44 geschehen, wenn die vorliegende Abgasrückführmenge nicht ausreicht.

Ebenso kann bereits in Schritt S2 eine Abgasrückführmenge vorliegen und dann in Schritt S42 eine Erhöhung der Abgasrückführmenge angefordert werden.

Vorteilhafte Effekte der Erfindung werden nun beschrieben.

Gemäß dem anhand von Fig. 1 veranschaulichten Verfahren kann die Kraftstoffmenge die Steuergröße sein. Genauer gesagt wird die einzuspritzende Einspritz-Kraftstoffmenge zumindest bereichsweise unabhängig von einem vorgegebenen Lambda-Soll-Wert bestimmt. Insbesondere kann die Einspritz-Kraftstoffmenge innerhalb des Lambda-Soll-Bereichs [λ_{Soll-U}; λ_{Soll-O}] unabhängig von einem vorgegebenen Lambda-Soll-Wert bestimmt werden. Somit kann beispielsweise bei Schwankungen der dem Motor zugeführten Luftmenge die Kraftstoffmenge frei auf Grundlage der Vorgabekraftstoffmenge F_{Vorg} bestimmt werden, ohne dabei wie bei herkömmlichen Ottoverfahren an die zugeführte Luftmenge gebunden zu sein. Die Einspritz-Kraftstoffmenge wird zumindest bereichsweise, im obigen Ausführungsbeispiel im Lambda-Soll-Bereich [λ_{Soll-U}; λ_{Soll-O}], unabhängig von einem festen Lambda-Soll-Wert bestimmt. Somit kann die Flexibilität der Verbrennungskraftmaschine erhöht werden. Außerdem wird zur Ermittlung des Lambda-Vorgabe-Wertes λ_{Vorgabe} bzw. des Lambda-Einspritzwertes die Luftmenge L ermittelt. Somit wird die Einspritz-Kraftstoffmenge auf Grundlage der Luftmenge bestimmt. Vorzugsweise wird, wie hier, die Kraftstoffmenge auf Grundlage der Luftmenge und dem Lambda-Soll-Bereich bestimmt.

Zumindest im Lambda-Soll-Bereich wird die Einspritz-Kraftstoffmenge gleich der Vorgabekraftstoffmenge F_{Vorg} bestimmt. Somit kann unabhängig von einem bestimmten Lambda-Soll-Wert die gewünschte Vorgabe-Kraftstoffmenge eingestellt und eingespritzt werden. Der Begriff "Lambda-Soll-Bereich" kann eine Vielzahl von Lambda-Soll-Bereichen umfassen, wie in obiger Ausführung, den Lambda-Soll-Bereich [λ_{Soll-U}; λ_{Soll-O}] ohne Abgasrückführung und den Lambda-Soll-Bereich [λ_{Soll-U}; λ_{Soll-O}]_{R} mit Abgasrückführung.

In den Schritten S41 und S46 wird die Einspritz-Kraftstoffmenge F_{Einspritz} so bestimmt, dass der Lambda-Einspritz-Wert innerhalb eines zumindest einseitig durch einen ersten Lambda-Soll-Grenzwert λ_{Soll-U} begrenzten Lambda-Soll-Bereichs von Lambda-Soll-Werten liegt. Dabei wird in den Schritten S41 und S46 die Einspritz-Kraftstoffmenge so bestimmt, dass zu der Vorgabe-Kraftstoffmenge F_{Vorg} ein Inkrement ΔF addiert wird. Wird der untere Grenzwert λ_{Soll-U} unterschritten, ist dieses Inkrement negativ, sodass sich der Lambda-Einspritz-Wert durch Reduzierung der Kraftstoffmenge erhöht. Für den umgekehrten Fall, dass der obere Grenzwert überschritten würde, würde das Inkrement positiv sein. Zu beachten ist, dass im vorliegenden Fall, die Luftmenge festgelegt ist, also nicht geregelt wird, sondern eine durch Messung im Ansaugtrakt ermittelte Ist-Luftmenge L ist, und somit der Lambda-Einspritz-Wert durch Regelung der Kraftstoffmenge eingestellt wird.

Das Inkrement ΔF und damit die Einspritz-Kraftstoffmenge können so bestimmt werden, dass der Lambda-Einspritz-Wert dem Lambda-Soll-Grenzwert entspricht. Damit kann die Kraftstoffmenge bis an die Grenzen eines zulässigen Verbrennungsgemischs eingestellt werden. Die Kraftstoffmenge wird also so bestimmt, dass sich mit der zuzuführenden Ist-Luftmenge ein adäquates zulässiges Verbrennungsgemisch ergibt. Insbesondere kann sich eine verhältnismäßig geringe Korrektur der Vorgabe-Kraftstoffmenge ergeben, da der Lambda-Soll-Grenzwert der nächste Wert aus dem Lambda-Soll-Bereich bezüglich des Lambda-Vorgabewert ist.

In obiger Ausführungsform ist ein unterer Grenzwert des Bereichs von Lambda-Soll-Werten abhängig von einer Abgasrückführmenge, vorzugsweise größer gleich 1,2 und kleiner gleich 2,5, besonders bevorzugt größer gleich 1,2 und kleiner gleich 1,8 ist, nochmals bevorzugt entspricht er 1,2.

Damit kann sichergestellt werden, dass nicht ein zu fettes Wasserstoff/Luft-Gemisch für die Verbrennung bereitgestellt wird. Die mit Wasserstoff betriebene Verbrennungskraftmaschine wird damit im mageren Bereich (Lambda > 1) betrieben. Je nach Leistungsbereich kann der Grenzwert aus den zuvor genannten Wertebereichen entnommen werden. Der Lambda-Soll-Grenzwert ist also vorzugsweise über die Leistungsbereiche variabel.

Wie oben beschrieben, hängt der Lambda-Soll-Bereich [λ_{Soll-U}; λ_{Soll-O}]_{R} von der zur Verfügung stehenden Abgasrückführmenge ab. Somit kann der Lambda-Soll-Bereich variabel sein.

Wie oben beschrieben, weist die Verbrennungskraftmaschine der Ausführungsform weiterhin eine Abgasrückführeinrichtung auf, die zumindest bereichsweise Abgas in den Brennraum zurückführt. Durch das Vorsehen einer Abgasrückführung kann die Verbrennung im Brennraum stabilisiert werden. Beispielsweise kann ein Klopfen der Verbrennungskraftmaschine aufgrund von Fehlzündungen verhindert werden. Insbesondere bei mageren Verbrennungen enthält das rückgeführte Abgas einen erheblichen Anteil an unverbranntem Sauerstoff (Restgas), der zur Stabilisierung der Verbrennung beiträgt.

Nicht nur hängt der Lambda-Soll-Bereich [λ_{Soll-U}; λ_{Soll-O}]_{R} von der zur Verfügung stehenden Abgasrückführmenge ab, sondern in der Ausführungsform wird der untere Grenzwert λ_{Soll-U} abhängig von der Abgasrückführmenge angepasst. Somit wird die Abgasrückführmenge bei der Bestimmung der Einspritz-Kraftstoffmenge zumindest in Bereichen, in denen die Abgasrückführung aktiv ist, berücksichtigt. Insbesondere kann der erste Lambda-Soll-Grenzwert mit zunehmender angeforderter Abgasrückführmenge reduziert werden. Zu beachten ist, dass die Abgasrückführmenge nicht nur den Grenzwert des Lambda-Soll-Bereichs beeinflusst, sondern auch auf die zuzuführende Umgebungsluftmenge L wirkt, wie es durch den Pfeil in Fig. 1 dargestellt ist. Denn mit zunehmender Abgasrückführmenge sinkt die dem Brennraum zuzuführende Luftmenge. Bei gleichbleibender Vorgabe-Kraftstoffmenge sinkt damit der Lambda-Vorgabewert, der in Schritt S44 zu berücksichtigen ist. Zu beachten ist, dass in Fig. 1 die Luftmenge L für Schritt S2 eine zuletzt gemessene (gespeicherte) Luftmenge, wie beispielsweise aus dem vorherigen Zyklus, sein kann, während für Schritt S44 die aktuell gemessene Luftmenge verwendet werden kann, die in Anbetracht einer tatsächlichen Ist-Abgasrückführmenge reduziert ist. Mit anderen Worten kann zur Bestimmung, ob eine Abgasrückführmenge angefordert werden muss, ein Referenzwert der Luftmenge verwendet werden, der vorzugsweise aus einer aktuellen Messung des vorherigen Zyklus stammt, aber auch vorab für eine gegebene Verbrennungskraftmaschine ermittelt werden kann. Zur Kenntnis zu nehmen ist, dass die Anforderung einer Abgasrückführmenge nicht zwingend der Vergleich aus Schritt S2 vorangehen muss. Vielmehr kann auch stets oder für bestimmte Leistungsbereiche eine Abgasrückführmenge angefordert werden.

Wie in Fig.1 gezeigt, wird die Abgasrückführmenge Rₗₛₜ angefordert oder bei bereits vorhandener Abgasrückführmenge erhöht, wenn ein Lambda-Vorgabe-Wert, der eine Gemischbildung auf Grundlage der Vorgabe-Kraftstoffmenge und der Luftmenge anzeigt, außerhalb des Lambda-Soll-Bereichs [λ_{Soll-U}; λ_{Soll-O}] liegt.

Durch die Stabilisierung der Verbrennung mittels der Abgasrückführmenge, kann der Lambda-Soll-Bereich gerade dann vergrößert werden, wenn der Lambda-Vorgabe-Wert außerhalb des Lambda-Soll-Bereichs ohne Abgasrückführung liegt. Mit zunehmender Leistungsanforderung geht ein höherer Kraftstoffbedarf einher, weshalb der Lambda-Vorgabe-Wert außerhalb des zulässigen Bereichs gelangen kann. Deshalb kann eine Abgasrückführmenge auch ab einem Grenzwert der Leistungsanforderung angefordert werden, also wenn festgestellt wird, dass ein Grenzwert einer Leistungsanforderung überschritten wird. Bei instationären Laststeigerungen der Verbrennungskraftmaschine, wie beispielweise Beschleunigungsvorgängen in einem Kraftfahrzeug, kann durch Anforderung einer Abgasrückführmenge die notwendige Leistung bereitgestellt werden. Denn ohne die Abgasrückführmenge wäre der Lambda-Soll-Bereich stärker begrenzt und die notwendige Leistung könnte nicht bereitgestellt werden.

In der Ausführungsform wird mit Erhöhung der Vorgabe-Kraftstoffmenge F_{Vorg} aufgrund der Leistungsanforderung die angeforderte Abgasrückführmenge erhöht. Insbesondere wenn aus der gemessenen Luftmenge L ein Lambda-Soll-Bereich [λ_{Soll-U}; λ_{Soll-O}] ohne Abgasrückführung resultiert, der nicht mit der Vorgabekraftstoffmenge F_{Vorg} erreicht werden kann, wird eine Abgasrückführmenge angefordert. Vorteilhafterweise wird die Abgasrückführmenge beispielsweise mittels eines Ventils im Abgasrückführstrang so eingestellt, dass sich ein Lambda-Soll-Bereich [λ_{Soll-U}; λ_{Soll-O}] ergibt, der den sich aus der Luftmenge und der Vorgabe-Kraftstoffmenge F_{Vorg} ergebenden Lambda-Einspritzwert umfasst. Da mit zunehmender Leistungsanforderung die Vorgabekraftstoffmenge F_{Vorg} erhöht wird, wird auch die angeforderte Abgasrückführmenge erhöht. Somit wird vorteilhafterweise mit zunehmender Leistungsanforderung an die Verbrennungskraftmaschine die angeforderte Abgasrückführmenge erhöht.

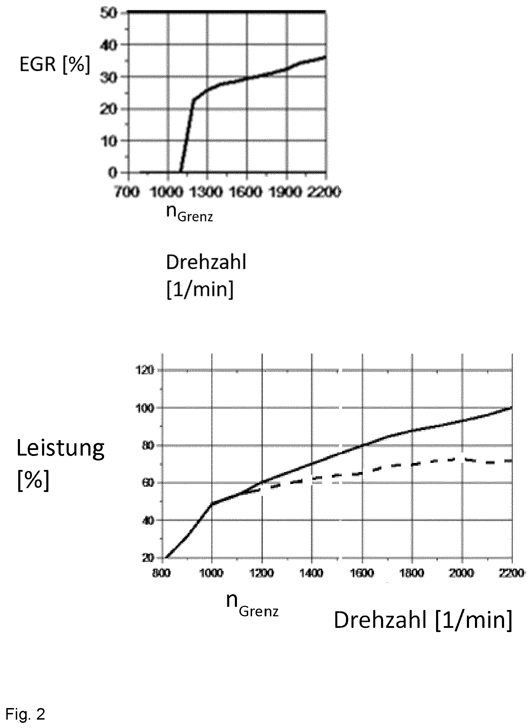

Damit kann ein fetteres Gemisch, also ein niedrigerer Lambda-Einspritz-Wert, eingestellt werden, wie es bei höheren Leistungsanforderungen gewünscht ist, da die Abgasrückführung die Verbrennung stabilisiert, und damit auch bei niedrigen Lambda-Einspritz-Werten ein Klopfen der Verbrennungskraftmaschine verhindert werden kann. Die Erhöhung der Abgasrückführmenge kann also zu einer Leistungserhöhung verwendet werden. Dies ist insbesondere bei instationären Vorgängen und bei Volllast vorteilhaft. Dieser Effekt wird in Fig. 2 veranschaulicht. Oben in Fig. 2 ist der Verlauf einer Abgasrückführrate EGR über der Drehzahl dargestellt. Wie darin zu sehen ist, wird die Abgasrückführung ab einem Drehzahlgrenzwert n_{Grenz} bereitgestellt und von da an kontinuierlich erhöht. Unten in Fig. 2 ist dagegen der Verlauf der Leistung dargestellt. Darin ist zu sehen, dass mit Erhöhung der Abgasrückführmenge auch eine höhere Leistung bereitgestellt werden kann. Den Verlauf der Leistung unter Bereitstellung der Abgasrückführung zeigt die durchgezogene Linie. Ohne Abgasrückführung ergibt sich der Verlauf der gestrichelten Linie. Ohne Abgasrückführung kann die Leistung folglich nicht mehr nennenswert gesteigert werden, selbst wenn die Kraftstoffmenge erhöht wird.

Dieser Effekt kann sich bei herkömmlichen Ottomotoren nicht einstellen, da dort auf einen festen Lambda-Wert reguliert wird. Somit muss bei Erhöhung der Abgasrückführmenge in herkömmlichen Ottomotoren die Luftmenge reduziert werden, was auch in reduzierter Kraftstoffmenge resultiert.

Der Heizwert des Verbrennungsgemischs korreliert mit der ausgebrachten Leistung. Deshalb wird die Vorgabe-Kraftstoffmenge F_{Vorg} zumindest auf Grundlage einer Leistungsanforderung an die Verbrennungskraftmaschine bestimmt werden.

Damit kann die Leistungsanforderung als Grundlage für die Bestimmung der Vorgabe-Kraftstoffmenge und damit auch der Einspritz-Kraftstoffmenge dienen.

Mit zunehmender Leistungsanforderung wird vorzugsweise die Vorgabe-Kraftstoffmenge erhöht, und andersherum. Der Heizwert des Wasserstoff/Luft-Gemischs korreliert mit dem Anteil an Kraftstoff am Gemisch. Somit kann einer höheren Leistungsanforderung durch eine Erhöhung der Kraftstoffmenge gerecht werden.

In obiger Ausführungsform kann zur Bestimmung der Einspritz-Kraftstoffmenge zumindest bereichsweise ein Klopfsignalwert verwendet werden.

Gemäß diesem Aspekt kann ein Klopfsignalwert, und damit ein Wert, der Verbrennungsanomalien anzeigt, bei der Bestimmung der Kraftstoffmenge berücksichtigt werden. Dabei kann anhand des Klopfsignalwerts, beispielsweise aus einem vorangehenden Verbrennungszyklus, Auskunft über die Klopfneigung eines betreffenden Zylinders der Verbrennungskraftmaschine erhalten werden. Die Klopfneigung hängt von Faktoren wie Temperaturen der Brennraumwand, Verdichtung und Fertigungstoleranzen ab. Diese Faktoren können in der Bestimmung der Einspritz-Kraftstoffmenge für den momentanen Zyklus durch den Klopfsignalwert verwendet werden. Der Klopfsignalwert kann weiterhin Aufschluss geben über eine Zusammensetzung des rückgeführten Abgases. Beispielsweise kann ein ein stärkeres Klopfen anzeigender Klopfsignalwert Aufschluss über einen geringen Sauerstoffgehalt im Abgas geben, was die Stabilisierung der Verbrennung erschwert. Der Klopfsignalwert kann weiter Auskunft über die tatsächlich zur Verfügung stehende Abgasrückführmenge geben, die von der angeforderten Abgasrückführmenge abweichen kann. Auch können Fehler bei der Luftmengenmessung berücksichtigt und ausgeglichen werden.

Dabei wird vorzugsweise der Lambda-Soll-Bereich auf Grundlage des Klopfsignalwerts bestimmt und besonders bevorzugt der erste Lambda-Soll-Grenzwert mit zunehmendem Klopfsignalwert erhöht.

Damit kann ein Klopfen der Verbrennungskraftmaschine gelindert werden. Denn durch die Erhöhung des Lambda-Soll-Grenzwerts kann das Gemisch abgemagert werden, was die Klopfneigung reduziert.

Der Klopfsignalwert kann auch wie folgt berücksichtigt werden. Wird beispielsweise in Schritt S2 obiger Ausführungsform der Lambda-Soll-Bereich auf Grundlage des Klopfsignalwertes angepasst, wird in Schritt S41 die Kraftstoffmenge durch das Inkrement ΔF verändert.

Wird jedoch eine Vielzahl von Brennräumen vorgesehen, kann aufgrund der Durchführung von Schritt S41 der negative Wert des Inkrements ΔF in einem Schritt a) einer Kraftstoffmenge von zumindest einem anderen Brennraum hinzugefügt werden, oder der negative Wert des Inkrements ΔF auf eine Vielzahl von Brennräumen aufgeteilt werden.

Damit kann auf Grundlage eines zumindest einem Brennraum zugeordneten (gemessenen) Klopfsignalwertes sowohl die Einspritz-Kraftstoffmenge des zumindest einen Brennraums als auch die Einspritz-Kraftstoffmenge zumindest eines anderen Brennraums bestimmt werden. Durch die Bestimmung des Lambda-Soll-Bereichs auf Grundlage des Klopfsignalwerts und der anschließenden Korrektur der Kraftstoffmenge in Schritt S41 kann der Klopfsignalwert des einen Brennraums abnehmen, während an dem zumindest einen anderen der Vielzahl von Brennräumen die Kraftstoffmenge so bestimmt wird, dass eine Gesamt-Vorgabe-Kraftstoffmenge, die eine vorgegebene Menge von allen Brennräumen zuführendem Kraftstoff ist, so nah wie möglich angenähert wird, nochmals bevorzugt erreicht wird. Der eine Brennraum kann mit einem abgemagerten Gemisch verglichen mit einem sich mit der Vorgabe-Kraftstoffmenge ergebenden Gemisch, was durch eine gegenüber der Vorgabe-Kraftstoffmenge reduzierte Einspritz-Kraftstoffmenge erreicht werden kann, weiterbetrieben werden.

Insbesondere kann an einzelnen Brennräumen die Anpassung der Kraftstoffmenge an dem zumindest einen Brennraum kompensiert werden. Vorzugsweise ist der Klopfsignalwert des zumindest einen Brennraums höher als der des zumindest einen anderen Brennraums.

Die Gesamt-Vorgabe-Kraftstoffmenge kann eine Kraftstoffmenge sein, die auf Grundlage einer Leistungsanforderung bestimmt wird. Die Vorgabe-Kraftstoffmenge eines jeden einzelnen Brennraums kann aus der Gesamt-Vorgabe-Kraftstoffmenge ermittelt werden, indem beispielsweise die Gesamt-Vorgabe-Kraftstoffmenge durch die Anzahl der Brennräume geteilt wird, wenn die Brennräume identisch sind.

Vorzugsweise wird in a), wie zuvor beschrieben, der Betrag einer Änderungsmenge gegenüber einer Vorgabekraftstoffmenge des einen Brennraums zumindest teilweise, vorzugsweise vollständig, von der Kraftstoffmenge von zumindest einem anderen Brennraum kompensiert.

Die zuvor beschriebene Umverteilung der Kraftstoffmenge kann abhängig von den jeweiligen Klopfsignalwerten der anderen Brennräume erfolgen. So können Brennräume mit niedrigeren zugeordneten Klopfsignalwerten anteilig einen größeren Anteil der Änderungsmenge kompensieren.

Kann durch die Umverteilung die Gesamt-Vorgabe-Kraftstoffmenge oder die Leistungsanforderung erreicht werden, kann auf die Schritte S42 bis S46 verzichtet werden.

Allerdings ist es möglich, Umverteilung und Abgasrückführung zu kombinieren. Wird beispielsweise festgestellt, dass die Gesamt-Vorgabe-Kraftstoffmenge nicht durch Kompensation an anderen Brennräumen erreicht werden kann, kann an zumindest einem der Brennräume die Abgasrückführmenge erhöht werden. Dies entspricht dem oben erwähnten Schritt b). Wie bereits zuvor ausgeführt, kann durch b) die Verbrennung stabilisiert werden. Die Erhöhung der Abgasrückführmenge erfolgt zumindest an dem einen Brennraum, dem ein kritischer (höchster) Klopfsignalwert zugeordnet ist, beispielsweise durch ein Ventil oder eine Drossel in dem Zuführkanal zu dem jeweiligen Brennraum. Sie kann allerdings auch global für jeden von der Vielzahl von Brennräumen erfolgen, wobei dann nicht in jedem Zuführkanal ein Ventil oder eine Drossel vorgesehen werden muss, sondern über ein zentrales Ventil die Regelung erfolgen kann. Das vereinfacht das System und sorgt für eine Stabilisierung der Verbrennung in allen Zylindern bzw. Brennräumen. Deshalb kann damit in dem zumindest einen anderen Brennraum die Kraftstoffmenge erhöht werden. Eine Änderungsmenge an dem zumindest einen Brennraum kann somit an dem zumindest einen anderen Brennraum besser aufgenommen werden.

Alternativ oder zusätzlich zur Erhöhung der Abgasrückführmenge kann auch der Zündzeitpunkt an zumindest dem einen Brennraum zu einem späteren Zeitpunkt verschoben werden (Schritt c)) und/oder die Leistungsanforderung an die Verbrennungskraftmaschine verringert werden (Schritt d)).

Die Spätstellung der Zündung unterbindet ein zu frühes unkontrolliertes Verbrennen. Insbesondere kann die Zündkerze zu einem späteren Zeitpunkt aktiviert werden. Verschieben des Zündzeitpunkts zu einem späteren Zeitpunkt ist beispielsweise auf eine Kolbenposition des den Brennraum begrenzenden Kolbens oder einen Kurbelwinkel bezogen und gegenüber einem Referenzwert des Zündzeitpunkts gemeint. Der Referenzwert kann beispielsweise der Zündzeitpunkt aus dem vorherigen Zyklus sein, oder ein sonstiger Referenzwert der dem Verbrennungs-Lambda des einen Brennraums zugeordnet ist, vorzugsweise ein optimaler Zündzeitpunkt. Insbesondere kann das Gemisch zu einem Zeitpunkt entzündet werden, an dem sich der Kolben näher einem oberen Totpunkt befindet als zum Referenzzeitpunkt.

Die Reduzierung der Leistungsanforderung bewirkt, dass die Gesamt-Vorgabe-Kraftstoffmenge reduziert werden kann. Dies wird insbesondere durch die Reduzierung der Vorgabe-Kraftstoffmenge und damit der Leistungsanforderung an dem zumindest einen Brennraum erreicht.

Es ist vorteilhaft, die Steuerung der Abgasrückführung nach der Umverteilung zu aktivieren, wenn beispielsweise festgestellt wird, dass sich der Klopfsignalwert trotz Umverteilung über einem zulässigen Grenzwert befindet.

Damit werden die Schritte b), c) und d) in dieser Reihenfolge durchgeführt. Somit können motorschonende Schritte wie Umverteilung und Abgasrückführung zuerst durchgeführt werden.

Es ist auch möglich, eine Prüfung durchzuführen, ob eine Umverteilung der Kraftstoffmenge möglich ist. Wenn dem so ist, kann die Kraftstoffumverteilung durchgeführt werden, anderenfalls kann einer der Schritte b), c) und d) durchgeführt werden.

Der Aspekt der Umverteilung kann mit dem Aspekt der Bestimmung der Einspritz-Kraftstoffmenge auf Grundlage der Luftmenge kombiniert werden

Unabhängig von der Zahl der Brennräume, kann die Kraftstoffmenge auf Grundlage eines Klopfsignalwertes und/oder der Abgasrückführmenge bestimmt werden. Insbesondere kann die Abgasrückführmenge auf Grundlage des Klopfsignalwertes angefordert werden. So ist es beispielsweise möglich, in Schritt S2 obiger Ausführungsform den Lambda-Soll-Bereich auf Grundlage des Klopfsignalwertes anzupassen. Durch Erhöhung einer Abgasrückführmenge kann der Lambda-Soll-Bereich wiederum erhöht werden. Mit erhöhtem Klopfsignalwert wird also vorteilhafterweise die Abgasrückführmenge erhöht.

Ebenso kann in der Ausführungsform eine Lambdasonde in einem Abgasstrang vorgesehen werden. Somit kann zusätzlich ein Signalwert der Lambdasonde zur Bestimmung der Einspritzkraftstoffmenge verwendet werden.

Damit kann der Restgasgehalt im Abgas bestimmt werden, der Auskunft über das Gemischverhältnis aus dem vorangehenden Verbrennungszyklus geben kann. Im Falle einer angeforderten Abgasrückführung kann diese Information doppelt relevant sein. Denn sie gibt zusätzlich Aufschluss über den Restgasgehalt des Abgases, das dem Brennraum über die Abgasrückführung wieder zugeführt wird. Somit kann der Lambda-Soll-Grenzwert ebenfalls auf Grundlage der Lambdasondenmessung bestimmt werden.

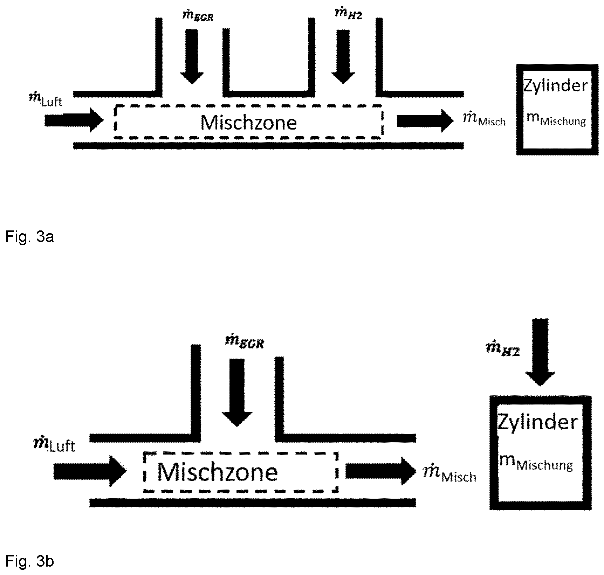

In obiger Ausführungsform wird die Luftmenge (Luftmasse) beispielsweise mittels eines Luftmassenmessers gemessen. Allerdings kann die Luftmenge beispielsweise auch anhand von Parametern modelliert werden. Figuren 3a und 3b zeigen, wie sich eine Zylinderfüllmenge, also eine Mischung aus Kraftstoff, Luft und rückgeführtem Abgas in einem Brennraum zusammensetzt. Bei einer äußeren Gemischbildung gemäß Fig. 3a wird einem Luftmassenstrom *ṁ*_{Luft}, ein Massenstrom von rückgeführtem Abgas *ṁ*_{EGR} stromab zugeführt. Weiterhin stromab wird dann der Wasserstoffmassenstrom *ṁ*_{H2} in einen Zuführkanal zu dem Zylinder zugeführt. In einer Mischzone des Zuführkanals werden die Massenströme der Luft aus einem Luftzuströmkanal, des rückgeführten Abgases aus einem Abgaszuströmkanal und des Wasserstoffes aus einem Kraftstoffzuströmkanal vermischt. Dies resultiert in dem Mischungsmassenstrom *ṁ*_{Misch}. Über die Zeit integriert, über die der vermischte Massenstrom in den Zylinder einströmt, ergibt sich die Zylinderfüllmasse m_{Mi-schung} bestehend aus Kraftstoff, Luft und EGR. Sowohl in dem Luftzuströmkanal als auch in dem Abgaszuströmkanal kann sich ein Luftmassenmesser befinden, der den Massenstrom in dem jeweiligen Zuströmkanal misst. Über die Zeit integriert, ergibt sich die Luftmasse L und die rückgeführte Menge an Abgas Rₗₛₜ, die in dem Gemisch m_{Mischung} vorhanden sind. Allerdings kann auch nur einer oder gar keiner dieser Werte gemessen werden und zumindest ein Luftmassenmesser weggelassen werden. Wenn beispielsweise ein maximales Zylindervolumen und/oder Querschnitte der Zuströmkanäle bekannt sind, kann beispielsweise über Drucksensoren im jeweiligen Zuströmkanal die jeweilige Menge (Masse) an Gas modelliert werden.

Gegenüber Fig. 3a zeigt Fig. 3b den Fall einer inneren Gemischbildung, wobei der Kraftstoff erst in dem Zylinder zugeführt wird, vorzugsweise wenn der Brennraum geschlossen ist. Die Mischzone vermischt also nur die Massenströme der Luft und des rückgeführten Abgases. Auch hier können Luftmenge und Abgasrückführmenge gemessen oder modelliert werden.

Die Luftmenge und/oder die Abgasrückführmenge sind vorzugsweise bekannte Ist-Größen für den durchzuführenden Verbrennungszyklus, die beispielsweise auf Grundlage von Sensoren oder Modellierung ermittelt werden können. Die Kraftstoffmenge kann beispielsweise über die Öffnung einer Einspritzdüse reguliert werden. In beiden Mischungsarten kann durch die bekannten Größen jeweils die Kraftstoffmenge angepasst werden.

Das obige Verfahren eignet sich zur Anwendung in beiden Typen von Verbrennungskraftmaschinen.

Die obigen Schritte müssen nicht notwendigerweise alle vorgesehen werden, noch müssen sie notwendigerweise in dieser Reihenfolge durchgeführt werden. In Bereichen, in denen keine Abgasrückführung aktiviert wird, kann zum Beispiel auf die Schritte S42 bis S46 verzichtet werden. Es kann allerdings auch auf die Schritte S3 bis S41 verzichtet werden, wenn beispielsweise die Steuereinrichtung direkt für bestimmte Leistungsanforderungen eine Abgasrückführmenge anfordert.

In der obigen Beschreibung kann, wenn immer sich auf eine Abgasrückführung bezogen wird, stattdessen oder in Kombination auch die Inertmittelzuführung verwendet werden.

Die vorliegende Erfindung eignet sich besonders in Verbrennungsmotoren mit ungeregelter Luftmenge. Allerdings kann beispielsweise auch eine Drosselklappe im Zuführkanal zum Brennraum vorgesehen werden, die in Teillastbereichen einen Querschnitt des Zuführkanals begrenzt, und im Volllastbereich den Querschnitt vollständig freigibt.

Vorzugsweise wird Wasserstoff ausschließlich als Kraftstoff verwendet.

Der Lambda-Soll-Bereich kann auch nur einen Lambda-Soll-Wert umfassen. Somit kann die Kraftstoffmenge immer bezüglich eines Lambda-Soll-Wertes eingestellt werden, der variabel ist, beispielsweise in Abhängigkeit der Abgasrückführmenge.

In der vorliegenden Offenbarung bezieht sich der Begriff "bereichsweise" vorzugsweise auf Leistungsbereiche und/oder Lambda-Bereiche. Beispielsweise wird innerhalb eines Lambda-Soll-Bereichs die Kraftstoffmenge unabhängig von einem Lambda-Soll-Wert bestimmt. Die Luftmenge kann beispielsweise nur in bestimmten Leistungsbereichen ermittelt werden. Beispielsweise kann in Teillastbereichen eine Bestimmung auf Grundlage der Luftmenge nicht vorgenommen werden, da der Motor hierbei keine Gefahr läuft, zu klopfen.

Der Begriff "zumindest" schließt, falls nicht anders spezifiziert, auch die Gesamtheit mit ein.

Der Begriff "Leistung" umfasst Moment und/oder Drehzahl der Verbrennungskraftmaschine.

Der Begriff "Menge" umfasst insbesondere Masse, kann aber beispielsweise auch Teilchenzahl oder Volumen umfassen.

"Einspritzung" umfasst in dieser Offenbarung jede Art der Kraftstoffzuführung zur Bildung des Verbrennungsgemischs.

## Patentansprüche

1. Verfahren zum Betrieb einer fremdzündenden Verbrennungskraftmaschine, wobei
die Verbrennungskraftmaschine mit Wasserstoff als Kraftstoff betrieben wird, wobei die Verbrennungskraftmaschine weiterhin eine Abgasrückführeinrichtung, die zumindest bereichsweise Abgas in den Brennraum zurückführt und/oder eine Inertmittelzuführeinrichtung, die konfiguriert ist, ein nicht an der Verbrennung teilnehmendes Inertmittel, vorzugsweise Wasser, in den Brennraum zuzuführen, aufweist,
ein Lambda-Einspritz-Wert ein Wert ist, der eine Gemischbildung auf Grundlage einer einem Brennraum der Verbrennungskraftmaschine zuzuführenden Einspritz-Kraftstoffmenge (F_{Einspritz}) und einer von außerhalb der Verbrennungskraftmaschine dem Brennraum zuzuführenden Luftmenge (L) anzeigt,
wobei die Einspritz-Kraftstoffmenge zumindest in bestimmten Leistungsbereichen unabhängig von einem Lambda-Soll-Wert zumindest auf Grundlage einer Vorgabe-Kraftstoffmenge (F_{Vorg}) und auf Grundlage einer Abgasrückführmenge (R) und/oder einer Inertmittelzuführmenge bestimmt wird, bevorzugt gleich der Vorgabe-Kraftstoffmenge (F_{Vorg}) bestimmt wird, und
die Einspritz-Kraftstoffmenge zumindest in bestimmten Leistungsbereichen zumindest auf Grundlage der Luftmenge bestimmt wird,
**dadurch gekennzeichnet, dass** die Einspritz-Kraftstoffmenge zumindest auf Grundlage von einem Lambda-Soll-Bereich ([λ_{Soll-U}; λ_{Soll-O}]) und in dem Lambda-Soll-Bereich ([λ_{Soll-U}; λ_{Soll-O}]) unabhängig von einem Lambda-Soll-Wert so bestimmt wird, dass der Lambda-Einspritz-Wert innerhalb des zumindest einseitig durch einen ersten Lambda-Soll-Grenzwert begrenzten Lambda-Soll-Bereichs von Lambda-Soll-Werten liegt, wobei der Lambda-Soll-Bereich ([λ_{Soll-U}; λ_{Soll-O}]), insbesondere der erste Lambda-Soll-Grenzwert, von der Abgasrückführmenge (R) und/oder Inertmittelzuführmenge abhängig ist, vorzugsweise der erste Lambda-Soll-Grenzwert mit zunehmender angeforderter Abgasrückführmenge und/oder Inertmittelzuführmenge reduziert wird.

2. Verfahren nach Anspruch 1, wobei der erste Lambda-Soll-Grenzwert ein unterer Grenzwert (λ_{Soll-U}) des Bereichs von Lambda-Soll-Werten ist, vorzugsweise größer gleich 1,2 und kleiner gleich 5, besonders bevorzugt größer gleich 1,2 und kleiner gleich 1,8 ist, nochmals bevorzugt 1,2 entspricht.

3. Verfahren nach Anspruch 1 oder 2, wobei die Einspritz-Kraftstoffmenge so bestimmt wird, dass der Lambda-Einspritz-Wert dem Lambda-Soll-Grenzwert (λ_{Soll-U}) entspricht, vorzugsweise wenn ein Lambda-Vorgabe-Wert (λ_{Vorgabe}), der eine Gemischbildung auf Grundlage einer Vorgabe-Kraftstoffmenge und der Luftmenge (L) anzeigt, außerhalb des Lambda-Soll-Bereichs ([λ_{Soll-U}; λ_{Soll-O}]) liegt.

4. Verfahren nach einem der Ansprüche 1 bis 3, wobei eine Abgasrückführmenge und/oder eine Inertmittelzuführmenge angefordert oder erhöht wird,
wenn ein Lambda-Vorgabe-Wert (λ_{Vorgabe}), der eine Gemischbildung auf Grundlage einer Vorgabe-Kraftstoffmenge und der Luftmenge anzeigt, außerhalb des Lambda-Soll-Bereichs liegt, und/oder
ab einem Grenzwert einer Leistungsanforderung.

5. Verfahren nach einem der Ansprüche 1 bis 4, wobei mit zunehmender Leistungsanforderung an die Verbrennungskraftmaschine die angeforderte Abgasrückführmenge und/oder Inertmittelzuführmenge erhöht wird.

6. Verfahren nach einem der vorangehenden Ansprüche, wobei die Vorgabe-Kraftstoffmenge (F_{Vorg}) zumindest auf Grundlage einer Leistungsanforderung an die Verbrennungskraftmaschine bestimmt wird, vorzugsweise mit zunehmender Leistungsanforderung die Vorgabe-Kraftstoffmenge erhöht wird.

7. Verfahren nach einem der vorangehenden Ansprüche, wobei die Einspritz-Kraftstoffmenge zumindest bereichsweise auf Grundlage eines Klopfsignalwertes bestimmt wird, wobei vorzugsweise der erste Lambda-Soll-Grenzwert mit zunehmendem Klopfsignalwert erhöht wird.

8. Steuereinrichtung, die konfiguriert ist, ein Verfahren nach einem der vorangehenden Ansprüche durchzuführen.

9. Programm, das, wenn es auf einem mit einer Verbrennungskraftmaschine gekoppelten Computer ausgeführt wird, den Computer veranlasst, ein Verfahren gemäß einem der Ansprüche 1 bis 7 durchzuführen.

10. Computerlesbares Speichermedium, auf dem das Programm nach Anspruch 9 gespeichert ist.

## Claims

1. Method for operating a spark-ignition internal combustion engine, wherein
the internal combustion engine is operated using hydrogen as fuel, wherein the internal combustion engine furthermore comprises an exhaust gas recirculation device, which recirculates exhaust gas into the combustion chamber, at least in some ranges, and/or an inert medium supply device which is configured to supply an inert medium that does not participate in the combustion, preferably water, into the combustion chamber,
a lambda injection value is a value that indicates a formation of a mixture on the basis of an injection fuel quantity (F_{injection}) to be supplied to a combustion chamber of the internal combustion engine and an air quantity (L) to be supplied to the combustion chamber from outside of the internal combustion engine,
wherein the injection fuel quantity is determined, at least in some performance ranges, independently of a lambda target value at least on the basis of a default fuel quantity (F_{def}) and on the basis of an exhaust gas recirculation quantity (R) and/or an inert medium supply quantity, is preferably determined to be equal to the default fuel quantity (F_{def}), and
the injection fuel quantity is determined, at least in some performance ranges, on the basis of the air quantity,
**characterized in that** the injection fuel quantity is determined at least on the basis of a lambda target range ([λ_{target-l}; λ_{target-u}]) and in the lambda target range ([λ_{target-l}, λ_{target-u}]) independently of a lambda target value such that the lambda injection value is within the lambda target range of lambda target values that is limited at least on one side by a first lambda target limit value, wherein the lambda target range ([λ_{target-l}; λ_{target-u}]), in particular the first lambda target limit value, is dependent upon the exhaust gas recirculation quantity (R) and/or inert medium supply quantity, preferably the first lambda target limit value is reduced with increasing demanded exhaust gas recirculation quantity and/or inert medium supply quantity.

2. Method according to claim 1, wherein the first lambda target limit value is a lower limit value (λ_{target-l}) of the range of lambda target values, is preferably greater than or equal to 1.2 and less than or equal to 5, particularly preferably greater than or equal to 1.2 and less than or equal to 1.8, again preferably corresponds to 1.2.

3. Method according to claim 1 or 2, wherein the injection fuel quantity is determined such that the lambda injection value corresponds to the target lambda limit value (λ_{target-l}), preferably when a lambda default value (λ_{default}), which indicates a formation of a mixture on the basis of a default fuel quantity and the air quantity (L), is outside the lambda target range ([λ_{target-l}; λ_{target-u}]).

4. Method according to one of the claims 1 to 3, wherein an exhaust gas recirculation quantity and/or an inert medium supply quantity is demanded or increased,
if a lambda default value (λ_{default}), which indicates a formation of a mixture on the basis of the default fuel quantity and the air quantity, is outside the lambda target range and/or
from a limit value of a performance demand.

5. Method according to one of the claims 1 to 4, wherein the demanded exhaust gas recirculation quantity and/or inert medium supply quantity is increased as the performance demand for the internal combustion engine increases.

6. Method according to one of the preceding claims, wherein the default fuel quantity (F_{def}) is determined at least on the basis of a performance demand for the internal combustion engine, the default fuel quantity is preferably increased as the performance demand increases.

7. Method according to one of the preceding claims, wherein the injection fuel quantity is determined, at least in some ranges, on the basis of a knock signal value, wherein preferably the first lambda target limit value is increased as the knock signal value increases.

8. Controller configured to carry out a method according to one of the preceding claims.

9. Program which, when executed on a computer coupled to an internal combustion engine, causes the computer to perform a method according to one of the claims 1 to 7.

10. Computer-readable storage medium on which the program according to claim 9 is stored.

## Revendications

1. Procédé de fonctionnement d'un moteur à combustion interne à allumage commandé, dans lequel
le moteur à combustion interne fonctionne avec de l'hydrogène comme carburant, dans lequel le moteur à combustion interne comprend en outre un dispositif de recyclage des gaz d'échappement qui recycle au moins partiellement les gaz d'échappement dans la chambre de combustion et/ou un dispositif d'alimentation en agent inerte qui est configuré pour alimenter la chambre de combustion en un agent inerte ne participant pas à la combustion, de manière préférée de l'eau,
une valeur d'injection de lambda est une valeur indiquant la formation d'un mélange en se basant sur une quantité de carburant d'injection (F_{Einspritz}) à alimenter dans une chambre de combustion du moteur à combustion interne et sur une quantité d'air (L) à alimenter dans la chambre de combustion depuis l'extérieur du moteur à combustion interne,
dans lequel la quantité de carburant d'injection est déterminée au moins dans certaines plages de puissance, indépendamment d'une valeur de consigne de lambda, au moins en se basant sur une quantité de carburant prescrite (F_{Vorg}) et sur une quantité de recyclage de gaz d'échappement (R) et/ou sur une quantité d'alimentation en agent inerte, et est de manière préférée déterminée comme étant égale à la quantité de carburant prescrite (F_{vorg}), et
la quantité de carburant d'injection est déterminée, au moins dans certaines plages de puissance, au moins en se basant sur la quantité d'air,
**caractérisé en ce que** la quantité de carburant d'injection est déterminée au moins en se basant sur une plage de consigne de lambda ([λ_{soll-U} ; λ_{soll-O}]) et indépendamment d'une valeur de consigne de lambda dans la plage de consigne de lambda ([λ_{soll-U} ; λ_{soll-O}]) de sorte que la valeur d'injection de lambda se situe dans la plage de consigne de lambda des valeurs de lambda au moins unilatéralement limitée par une première valeur limite de lambda, dans lequel la plage de consigne de lambda ([λ_{soll-U} ; λ_{soll-O}]), en particulier la première valeur limite de lambda, dépend de la quantité de recyclage de gaz d'échappement (R) et/ou de la quantité d'alimentation en agent inerte, de manière préférée la première valeur limite de lambda est réduite lorsque la quantité de recyclage de gaz d'échappement et/ou la quantité d'alimentation en agent inerte demandée(s) augmente(nt).

2. Procédé selon la revendication 1, dans lequel la première valeur limite de consigne de lambda est une valeur limite inférieure (λ_{soll-U}) de la plage de valeurs de consigne de lambda, de manière préférée est supérieure ou égale à 1,2 et inférieure ou égale à 5, de manière particulièrement préférée est supérieure ou égale à 1,2 et inférieure ou égale à 1,8, de manière encore plus préférée est égale à 1,2.

3. Procédé selon la revendication 1 ou 2, dans lequel la quantité de carburant d'injection est déterminée de sorte que la valeur d'injection de lambda correspond à la valeur limite de consigne de lambda (λ_{soll-U}), de manière préférée lorsqu'une valeur de prescription de lambda (λ_{Vorgabe}), qui indique une formation de mélange en se basant sur une quantité de carburant prescrite et sur la quantité d'air (L), se trouve en dehors de la plage de consigne de lambda ([λ_{soll-U} ; λ_{soll-O}]).

4. Procédé selon l'une quelconque des revendications 1 à 3, dans lequel une quantité de recyclage de gaz d'échappement et/ou une quantité d'alimentation en agent inerte est/sont demandée(s) ou augmentée(s),
lorsqu'une valeur de prescription de lambda (λ_{Vorgabe}), qui indique une formation de mélange en se basant sur une quantité de carburant prescrite et sur la quantité d'air, se trouve en dehors de la plage de consigne de lambda, et/ou
à partir d'une valeur limite d'une demande de puissance.

5. Procédé selon l'une quelconque des revendications 1 à 4, dans lequel la quantité demandée de recyclage des gaz d'échappement et/ou la quantité d'alimentation en agent inerte est/sont augmentée(s) lorsque la demande de puissance au moteur à combustion interne augmente.

6. Procédé selon l'une quelconque des revendications précédentes, dans lequel la quantité de carburant prescrite (F_{Vorg}) est déterminée au moins en se basant sur une demande de puissance au moteur à combustion interne, de manière préférée la quantité de carburant prescrite est augmentée lorsque la demande de puissance augmente.

7. Procédé selon l'une quelconque des revendications précédentes, dans lequel la quantité de carburant d'injection est déterminée au moins partiellement en se basant sur une valeur de signal de cliquetis, dans lequel la première valeur limite de consigne de lambda est de manière préférée augmentée lorsque la valeur de signal de cliquetis augmente.

8. Dispositif de commande configuré pour mettre en œuvre un procédé selon l'une quelconque des revendications précédentes.

9. Programme qui, lorsqu'il est exécuté sur un ordinateur couplé à un moteur à combustion interne, amène l'ordinateur à mettre en œuvre un procédé selon l'une quelconque des revendications 1 à 7.

10. Support de stockage lisible par ordinateur et sur lequel le programme selon la revendication 9 est stocké.
